# EUROPÄISCHE PATENTSCHRIFT

(11) **EP 1 384 922 B1**
(45) Veröffentlichungstag und Bekanntmachung des Hinweises auf die Patenterteilung: **27.12.2006**
(21) Anmeldenummer: 03016960.1
(22) Anmeldetag: 25.07.2003
(51) Int. Cl.: F16H 37/08, B60K 5/08, B60K 1/02

(54) **Antriebssystem mit CVT-Getriebe für Schwerlast-Mobilantrieb**
Drive system with a CVT-Transmisssion for heavy vehicle
Systeme d'entrainement avec une transmission variable continue pour véhicule lourd

(30) Priorität: 27.07.2002 DE 10234370
(43) Veröffentlichungstag der Anmeldung: 28.01.2004
(73) Patentinhaber: PIV Drives GmbH, 61352 Bad Homburg (DE)
(72) Erfinder: Schopf, Walter, 61279 Grävenwiesbach (DE)
(74) Vertreter: Petersen, Frank

(56) Entgegenhaltungen:
- WO-A-00/59750
- DE-U1- 9 010 321

## Beschreibung

Die Erfindung betrifft ein Antriebssystem mit CVT-Getriebe (Kegelscheinbenumschlingungsgetriebe) gemäß dem Oberbegriff der Ansprüche 1 und 2.

CVT (Continously Variable Transmission) gehören als Kfz-Antriebskonzeptionen im Zusammenhang mit Brennkraftmaschinen zum Stande der Technik. Solche Antriebskonzeptionen haben sich in Studien-, Forschungs- und bereits auch in Pkw-Serienprojekten als vorteilhaft und zukunftsweisend erwiesen. Mit Energiespareffekten, Fahrkomfortsteigerungen und vor allem in der durch sie gegebenen Möglichkeit zur optimalen Motorkraftnutzung bergen sie vorteilhafte Furiktionseigenschaften für den Kfz-Antrieb. Eine entsprechende Anwendung wird beispielsweise beschrieben in der gattungsgemäßen WO 00159750A. Praktische CVT-Anwendungen im (allerdings leistungsschwachen) Nutzfahrzeugsektor haben sich ebenfalls bereits bewährt.

Im Gegensatz zum Pkw-Einsatz, wo der zeitlich häufigste Einsatz sich im "schnellen" abspielt, liegt bei Nutzfahrzeugen, zu denen im Rahmen dieser Erfindung auch die Arbeitsfahrzeuge wie Baumaschinen und dergleichen gerechnet werden, zeitanteilig der Einsatzschwerpunkt im "langsamen" bei meist erheblich höher liegenden Drehmomentbelastungen.

CVTs nach dem derzeitigen Entwicklungsstand sind jedoch für leistungsstarke Nutzfahrzeuge zu schwach. In der noch im Fluss befindlichen Fortentwicklung stecken zwar noch gewisse Leistungssteigerungspotentiale, jedoch zeichnen sich darin auch natürliche Grenzen ab. Beispielsweise ist in der Kontaktflächenbelastung der Friktionsgetriebe eine Grenze zu sehen, da die Hertz'sche Pressung Grenzen setzt.

Ein Verstärken des Zug- oder Schubstranges hat Gewichtssteigerungen zufolge, was ähnlich wie eine Geschwindigkeitserhöhung des Stranges durch die damit zunehmende auf ihn einwirkende Fliehkraft eine Verminderung des Nutzungsanteiles und somit der übertragbaren Leistung bewirkt.

Durch die auf die Zugkraft sich günstig auswirkende Drehmomentwandlung im Übertragungsstrang lässt sich andererseits auch die Dimensionierung der Antriebsmaschine kleiner halten, womit sich auch die Verluste in den häufigsten Betriebsbereichen reduzieren lassen.

Es sei an dieser Stelle insbesondere auch noch erwähnt, dass als Kraftmaschinen im Schwerlast-Mobilantriebbereich insbesondere auch Elektromotoren verwandt werden können, die über Brennstoffzellen zu betreiben sind.

In Brennstoffzellen wird vorteilhafterweise gegenüber anderen Verfahren unter Vermeidung des Umweges über die Wärme- und mechanische Energie durch direkte Umwandlung von chemischer in elektrische Energie eine erhöhte Energieausbeute erzielt und eine geringere Umweltbelastung gegenüber herkömmlichen Energienutzungs- und Antriebskonzeptionen verursacht.

Darüber hinaus liegen infolge der Nutzbarkeit
- noch reichlich vorhandener gasförmiger H₂-haltiger Brennstoffe fossiler Herkunft, geeignet zur Aufbereitung zum Brennstoffzellenbrennstoff,
- regenerativer Energien zur Wasser-Elektrolyse,
- heimischer Brennstoffressourcen (Biogas / Methanol)
- und riesiger Mengen (zwar noch nicht erschlossener) stark H₂-haltiger Gashydrate am Meeresboden als Brennstoffzellen-Brennstoff oder zumindest als Ausgangsgrundstoff zu solchen,
für weitreichende Zukunftsperioden äußerst günstige Einsatzperspektiven für die Brennstoffzellen im Fahrzeugbereich vor. Sie ist daher, obwohl ihre Entwicklung zur Zeit noch nicht abgeschlossen ist, als zukünftige Energieversorgung für den Fahrzeugantrieb ein anerkannter Favorit. Ihre Tauglichkeit und Vorzüge wurden dabei bereits in verschiedenen Versuchsprojekten unter Beweis gestellt.

Da die effizienteste Treibstoffform für die Brennstoffzelle, nämlich reiner Wasserstoff, in der allernächsten Zukunft unter wirtschaftlich vertretbaren Bedingungen nicht zur Verfügung stehen wird, ist eine Brennstoffaufbereitung an Bord eines Fahrzeuges mittels eines Reformers o. ä. als die obligatorische Lösung anzusehen.

Dies hat beim Pkw-Einsatz die hierdurch in Kauf zu nehmende Gewichtsbelastung als Nachteil.

Bei Nutzfahrzeugen wirkt sich dieser negative Nebeneffekt aufgrund ihres höheren Gewichtes weniger aus, so dass für dieses Einsatzgebiet die Brennstoffzelle mit vorgenannter Versorgungsweise geradezu prädestiniert ist.

Trotz der bereits höheren Effizienz in der Energieumsetzung beim Einsatz der umweltfreundlicheren Brennstoffzelle bleibt die Aufgabe einer Wirkungsgradverbesserung für einen entsprechenden Antrieb, insbesondere auch bei der Übertragung der mechanischen Energie im Antriebstrang.

Dabei soll es ermöglicht werden, bereits bewährte Serien-CVT-Komponenten für entsprechend leistungsstarke Fahrzeugantriebe zu verwenden.

Dabei sind die Vorzüge eines CVT-Einsatzes bezüglich des stufenlosen Anpassens der Übersetzung zum Betreiben des Antriebsmotors in einem von der Drehzahl abhängigen verbrauchs- und drehmomentgünstigen Betriebsbereich bekannt. Dies findet allerdings seine Grenze, wenn der Antriebsleistungsbedarf über oder aber auch weit unterhalb des optimalen Leistungskennfeldbereiches des Antriebsmotors liegt.

Wie bei den meisten Kraftmaschinen, so wird auch beim vorzugsweise im Mobilantrieb eingesetzten Verbrennungsmotor der Wirkungsgrad auch von seiner jeweiligen Auslastung stark beeinflusst. Ein optimaler Leistungsbereich ist dabei üblicherweise nahe dem maximalen Nennmoment eines Motors zu erreichen. Da aber ein Antriebsmotor für die Nennleistung eines Fahrzeuges und einer anderen beliebigen Anlage auf dessen bzw. deren Nennleistung ausgelegt sein muss, wird ein Motor bei stark gemischter Betriebsweise nur selten in spezifisch verbrauchsgünstigen Leistungsbereichen betrieben.

Gegenüber der herkömmlichen CVT-Domäne, dem Pkw-Einsatz, für den ausgereifte und bewährte CVT-Serienkomponenten zur Verfügung stehen, sind bei dem hier vorgesehenen Erfindungsbereich die Lebenserwartungen länger und die Betriebsbedingungen meist rauer. Eine erfindungsgemäße CVT-Konzeption muss auf derartige Tatbestände Rücksicht nehmen.

Um die erfindungsgemäß zu berücksichtigenden hohen Leistungen übertragen zu können, ist es eine bekannte Lösung, mit Leistungsverzweigung im Antriebspfad ein CVT anzuordnen. Dieses wird nur mit einem Teil der durchgesetzten Leistung beaufschlagt. Hierdurch wird ermöglicht, eine angestrebte Drehmomentwandlung zu erreichen, wenn auch nur bei eingeschränktem wirksamen Regelbereich.

Ein weiteres Ausführungsbeispiel einer CVT-Antriebskonzeption liegt der DE-A-41 07 789 zugrunde. Hier soll allerdings erreicht werden, eine möglichst große Drehzahlspreizung zu erzielen, sowie eine Fahrtrichtungsumkehr in eine Schaltstrategie mit Planetengetriebe mit einzubeziehen. Dies wird dort abgestimmt auf einen antriebsseitig vorgeschalteten hydrostatischen Drehmomentwandler anstatt auf ein CVT.

Eine weitere Lösung mit einem Planetengetriebe und mit CVTs wird offenbart in der DE-U-90 10 321.1. Die darin beanspruchten Mehrfach-CVT- und Planetenkombinationen liegen zur Rückgewinnung, Speicherung und Nutzung von Bremsenergie, vorzugsweise zur Schaffung eines Hybridantriebes vor.

Die Lösung der oben angeführten Aufgaben wird mit den Merkmalen der Ansprüche 1, 2 erreicht.

Die in dem Antriebssystem gemäß Hauptanspruch vorgesehenen Antriebsmotoren können sowohl Verbrennungs- als auch Hydraulikmotoren sein. Des gleichen aber auch Elektromotoren, die dann vorzugsweise über eine Brennstoffzelle angetrieben sind.

Bei den erfindungsgemäß vorgesehenen Abtrieben kann es sich insbesondere um Hohlwellen handeln, die auf den erfindungsgemäß vorgesehenen Wellen angeordnet sind.

Diese Hohlwellen können an ihren den erfindungsgemäß vorgesehenen Schaltkupplungen abgewandten Enden jeweils verdrehfest ein Zahnrad tragen, das wiederum mit einem (Sammel-)Zahnrad in Eingriff steht. Dieses (Sammel-) Zahnrad kann dabei beispielsweise auch mit einem Kegelrad eines Differentialgetriebes verdrehfest verbunden sein.

Vorzugsweise sind die Komponenten von zwei CVTs in einem gemeinsamen Gehäuse angeordnet, wobei jedes CVT einem separaten Antrieb zugeordnet ist.

Außerdem können die antriebsseitigen Getriebewellen und die abtriebsseitigen Getriebewellen jeweils koaxial zueinander angeordnet sein und jeweils eine gemeinsame Drehachse aufweisen.

Weiterhin ist es im Rahmen der Erfindung, jedem CVT einen eigenen Antriebsmotor zuzuordnen. Außerdem kann auf der diesen Antriebsmotoren abgewandten Seite der CVT-Antriebswellen eine Schaltkupplung vorgesehen sein zum Zusammenkoppeln der angesprochenen Antriebs-Getriebewellen.

Außerdem kann als weiterführende Übertragungsvorrichtung an jede Getriebeabtriebswelle ein Drehzahl-Reduziergetriebe angeschlossen werden, dessen Ausgangswelle dann vorzugsweise über eine Gelenkwelle mit den Treibrädern des Fahrwerkes insbesondere eines Nutzfahrzeuges in Drehverbindung steht.

Weiterhin kann der Übertragsungspfad verzweigt ausgeführt werden, indem sowohl die CVT-Getriebeabtriebswelle mit den Antriebsbasen eines Sammelüberlagerungsgetriebes verbunden ist. Die Abtriebsbasis dieses Getriebes ist dann mit einem oder mehreren Treibrädern eines Fahrwerkes verbunden.

Auch hierbei sind die CVT-Kegelscheibenpaare auf in einem Getriebegehäuse angeordneten Wellen verdrehlos gelagert und jede dieser CVT-Getriebewellen ist einem Antriebsmotor zugeordnet. Die CVT-Kegelscheibenpaare sowie die Wellen und die auf diesen Wellen sitzenden Hohlwellen sind wiederum mit Kupplungsscheiben verbunden, die mit einer sie umschließenden Kupplungsglocke eine Schaltkupplung bilden. Hierdurch kann alternative der CVT-Kegelscheibensatz oder aber die Hohlwelle mit der Welle gekoppelt werden, die mit dem Antriebsmotor verbunden ist.

Auch hier ist vorgesehen, die Hohlwellen an ihren anderen Enden mit einem Zahnrad zu versehen, die mit der Eingangsbasis eines Sammelüberlagerungsgetriebes in Drehverbindung steht.

Vorzugsweise kann die Welle des Antriebsmotors auch selbst verlängert sein und als CVT-Getriebewelle fungieren. Dabei ist dann das Getriebegehäuse mit seinen Lagerbasen als auch die auf den Wellen angeordneten CVT- und sonstigen Komponenten so ausgeführt und angeordnet, dass vormontierte Einheiten aus Motor, Getriebewelle, Kegelscheibenpaar, Kupplung und Zahnrad von der motorseitigen Stirnseite des Gehäuses aus montiert und demontiert werden können.

Bei einer besonders bevorzugten Ausführungsform sind die beiden Antriebsmotoren, die den CVT-Kegelscheibenpaaren zugeordnet sind, in einem gemeinsamen Motorgehäuse untergebracht. Dies heißt, dass in einem Motorblock zwei Kurbelwellen mit den dazugehörigen Verbrennungsmotorkomponenten vorgesehen sind. Dabei sind dann die den jeweiligen Motorsträngen zugeordneten Motorkomponenten so ausgeführt und angeordnet, dass jeder Motor auch einzeln und unabhängig vom anderen Motor als separate Einheit betrieben werden kann.

Hierbei hat es sich als besonders günstig erwiesen, bei derartigen zu einer Baueinheit zusammengefassten zwei Verbrennungsmotoren die Zylinder nach Art eines Boxermotors auf beiden Seiten auskragend auszugestalten und sie weitgehend in der Ebene der CVT-Kegelscheibenachsen anzuordnen.

Die abtriebsseitig den CVTs nachgeschaltenen Reduziergetriebe können Planetengetriebe sein, die in einem gemeinsamen Gehäuse angeordnet sind. Derartigaze Planetengetriebe sollten vorzugsweise ein Planetenverhältnis von 1,0 aufweisen.

Bei einer besonders bevorzugten Ausführungsform sind die Eingangsbasen des Planetengetriebes mit zwei gleich großen Zahnkränzen versehen sowie im einheitlichen Getriebegehäuse gelagerten Zahnrädern. Es werden des weiteren kegelige Zahnkränze vorgeschlagen, die mit kegeligen Sonnenrädern kämmen, die in einem im Gehäuse gelagerten Steg mit radial verlaufender Drehachse gelagert sind. Dieser rotierfähige Steg bildet dabei die Abtriebsbasis des Sammel- und Überlagerungsgetriebes.

Diesem Sammel- und Überlagerungsgetriebe kann ein Drehzahlreduziergetriebe nachgeschaltet sein, das aus einem innerhalb des Überlagerungsgetriebes angeordneten weiteren Planetengetriebe besteht.

Selbstverständlich können die Planetengetriebe auch in herkömmlicher Bauweise ausgebildet sein und ein Planetenverhältnis von 0,73 bis 1,3 aufweisen. Hierzu wird insbesondere vorgeschlagen, dass die Eingangsbasen aus zwei in einem einheitlichen Getriebegehäuse gelagerten Zahnrädern bestehen, wobei eines dieser Zahnräder einen weiteren, als ein äußeres Sonnenrad fungierenden Zahnkranz trägt, während das andere Zahnrad über eine Hohlwelle mit einem inneren Sonnenrad in Drehverbindung steht, wobei diese Hohlwelle ersteres durchdringt und lagert. Außerdem ist ein Steg mit darin gelagerten Planetenrädern vorgesehen, der mit daran gelagerten Planetenrädern und der nach außen geführten Abtriebswelle die Ausgangsbasis des Übertragungsstranges bildet.

Die Kraftmaschinen-CVT-Kombination kann zwischen den leistungsübertragenden Zahnrädern beider Treibpfade und dem Sammel- und Überlagerungsgetriebe ein oder mehrere Untersetzungsstufen angeordnet haben.

Außerdem ist es möglich, dass beide Antriebsmotoren Einrichtungen zur Aufbringung eines vorbestimmten Stilstands-Haltemomentes aufweisen. Für diese Einrichtung ist alternativ möglich
- eine am oder im Motor angeordnete Haltebremse,
- eine Kompressionsbremse (bei Ausbildung der Kraftmaschine als Verbrennungsmotor)
- eine Gleichstrombremseinrichtung (bei Ausbildung der Kraftmaschine als Elektromotor)
- eine mechanische Blockiereinrichtung, die auf den Übertragungspfaden zu den Sammel- und Überlagerungsgetrieben angeordnet ist.

Es können auch innerhalb des Getriebegehäuses an den Eingangsbasen der Sammel- und Überlagerungsgetriebe Blockiereinrichtungen angeordnet sein.

Vorzugsweise sind die hier beschriebenen Kraftmaschinen-CVT-Kombinationen an mehreren Treibachsen eines Fahrwerkes angeordnet, das zu einem Nutzfahrzeug oder einem fahrbaren Arbeitsgerät gehört.

Selbstverständlich ist es in diesem Zusammenhang auch möglich, einen aus mehreren Fahrzeugen bestehenden Zug vorzusehen, beispielsweise mit einer Zugmaschine und mehreren Anhängern oder aber Verbänden von fahrbaren Arbeitsgeräten, die jeweils mit einer entsprechenden Kraftmaschinen-CVT-Kombination versehen sind.

Dass der entsprechende Antrieb auch ein Kettenfahrwerk sein kann, soll der Vollständigkeit halber hier noch erwähnt werden. Die entsprechenden Ausgangswellen eines Fahrwerkes sind dann vorzugsweise mit einer Kette einer Fahrzeugseite in Verbindung zu bringen und es ist dann eine Steuer- und Regeleinrichtung vorzusehen, mit der über eine Übersetzungsregelung der CVTs die Lenkung des Kettenfahrzeuges bewirkt wird.

Es sei hier der guten Ordnung halber auch noch erwähnt, dass das Steuermanagement für das CVT in Antiblockiersystemen und/oder in eine elektronische Fahrzeugstabilisierungen integriert sein kann. Hierdurch ist es möglich, dass die Antriebsleistungen der seitenunterschiedlichen Antriebspfade nach einem kritischen Fahrsituationen angepassten, vorbestimmten Modus erfolgt. Die aus Antriebsmotor und CVT bestehende und wie oben gesteuerte Antriebseinheit kann dabei auch direkt am Treibrad eines Fahrwerkes angeordnet sein.

Weiterhin sei noch erwähnt, dass an den CVT-An- und Abtriebsbasen Drehzahlsensoren vorgesehen werden können, wie auch an den Antriebsmotoren oder in der ihr zugeordneten Leistungselektronik entsprechend der Einrichtungen, mit der die Motorleistung gemessen wird. Diese Elemente sind dann mit einer microprozessorgesteuerten Regeleinrichtung zu vernetzen, die mit elektronischen Komponenten, mit Leistungsschaltern und mit einer entsprechenden Regelsoftware versehen ist, die die momentanen Betriebs- und Belastungszustände erfasst und speichert.

Außerdem können mit diesen Elementen die ökonomisch günstigsten Kraftflüsse errechnet und geschaltet werden, so dass eine effiziente Nutzung des oder der Antriebsmotoren nach einem vorbestimmten Algorithmus bewirkt wird. Hierzu kann insbesondere bei erkanntem geringen Antriebsleistungsbedarf nur ein Antriebsmotor von zwei vorhandenen Motoren zur Leistungseinspeisung herangezogen werden. Außerdem kann bei Vorliegen oder Erreichen einer vorbestimmten Leistungsbedarfsmenge über diese Regelung eine Optimierungsberechnung vorgenommen werden und die Leistungsaufteilung zwischen einzelnen Motoren vorgenommen oder eine verlustminimierende Leistungsaufteilung unter den beiden Antriebsmotoren über der CVT eingeregelt werden.

Beim Betrieb mit Leistungsverzeigung über das CVT kann so auch eine laufende Erfassung, Summierung und Speicherung der in verschiedenen CVT-Übersetzungsbereichen gefahrenen Leistungen vorgenommen werden, wodurch Vergleichsprozesse durchzuführen sind, die bewirken, dass bei unausgeglichener Reibpartiebeanspruchung des Friktionsgetriebes der Kraftfluss zwischen den Kegelscheibensätzen geändert bzw. umgekehrt wird. Dies führt dazu, dass die Verschleißreserven des CVT gleichmäßig und optimal ausgenutzt werden können.

Auch kann beim Betrieb mit Leistungsverzweigung über das CVT bei Antrieb durch nur einen Motor über die Antriebswelle nach Überschreiten einer vorbestimmten Leistungsmarge des CVT-Pfades der zweite Antriebsmotor zur Leistungseinspeisung aktiviert werden. Beim Betrieb mit einer vollen Leistungsübertragung über das CVT ohne Leistungsverzweigung oder aber auch mit Leistungsverzweigung über das CVT kann nach Erkennen kritischer Betriebsbedingungen, wie zum Beispiel wiederholt auftretender Belastungsspitzen, einer der Antriebsmotoren durch Übersetzungsregelung am CVT im Leerlaufbetrieb gehalten werden, so dass bei Belastungsspitzen mit daraus resultierenden (kennlinienbedingten) Drehzahleinbrüchen diesem Motor spontan eine Leistungsspitze abverlangt wird, wodurch der CVT-Pfad entlastet und damit auch geschont wird.

Bei hohen Antriebsleistungen und vorliegend weitgehend gleichmäßiger Betriebsbedingungen, z. B. Fernfahrten mit hoher gleichbleibender Fahrgeschwindigkeit wird das CVT von der Leistungsübertragung so auch entbunden, indem der Kraftfluss nur über starre Übertragungspfade geschaltet wird.

Eine entsprechende Elektronik kann auch Gefahrenmomente für das Aussetzen einer sicheren Traktion erkennen und mittels der CVT-Übersetzungsänderung in einzelnen Antriebsfahrten deren Übertragungsleistung nach vorbestimmten Regeln der Situation anpassen, wobei zur Bewirkung dieser Regelvorgänge Technologien bekannter Antiblockiersysteme zu Erkennung von abnormalem Schlupf an einzelnen Rädern genutzt werden können, als auch bekannte Fahrzeugstabilisierungssysteme.

Die Elektronik hat dabei vorzugsweise auch Rechenfähigkeiten zur Ermittlung von (Gegen-) Maßnahmen zur Sicherstellung eines sicheren Reibschlusses zur Fahrbahn, wobei die Zustandsparameter Fahrgeschwindigkeit und Lenkradius unter Einbindung eines Fahrbahn-Nässesensors herangezogen werden können. Außerdem hat diese Elektronik vorzugsweise adaptive Rechen- und Speicherfähigkeiten, so dass aus momentan erfassten, die Fahrbahntraktion betreffende Betriebszuständen und aus gespeicherten früheren fahrzeugspezifischen Verhaltensweisen gefahrenminimierende Verteilungsregelungen der Antriebsleistung errechnet und bewirkt werden können. Hierbei können alternativ die für das Antriebsstrang-Management erforderlichen elektronischen Komponenten in ein allumfassendes Kfz-Antriebsmanagement-System integriert sein.

Weitere Vorteile und Merkmale der Erfindung ergeben sich aus der nachfolgenden Beschreibung der Zeichnungen. Dabei zeigt
- Figur 1: das Schema einer Antriebseinheit mit zwei Verbrennungsmotoren und CVT mit Kupplungseinrichtung und einem Differentialgetriebe,
- Figur 2: eine Doppelanordnung einer Motor-CVT-Kombination mit je einem nachgeschalteten drehzahlreduzierenden Planetengetriebe, das nicht Gegenstand der Erfindung ist;
- Figur 3: eine Motor-CVT-Kombination aus zwei Antriebsmotoren und CVTs auf verlängerten Motorwellen;
- Figur 4: eine Vorrichtung gemäß Figur 3;
- Figur 5: ein Diagramm für die relativen Drehmomentverläufe in Abhängigkeit der Abtriebsdrehzahl- proportionalen Fahrgeschwindigkeit einer erfindungsgemäßen Antriebskonzeption.

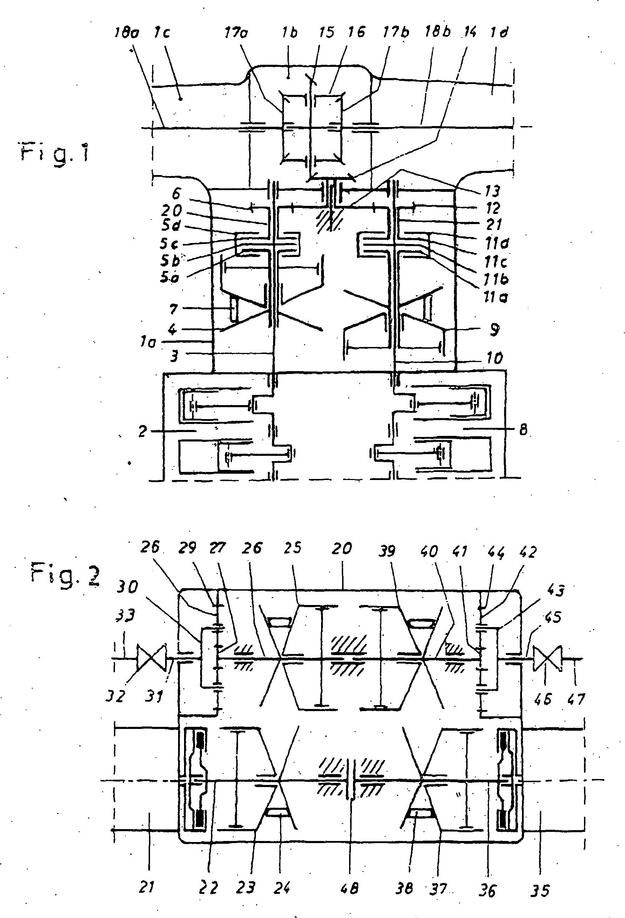

In der Figur 1 ist in einer Prinzipskizze eine Antriebseinheit dargestellt, die zwei Verbrennungsmotoren aufweist. Dabei ist der Antrieb alternativ auf einen Antriebsmotor und einem nachgeschalteten CVT schaltbar als auch auf einen ersten Antriebsmotor mit nachgeschaltetem CVT und einem zweiten Antriebsmotor, der direkt durchgeschaltet ist oder aber dass beide Antriebsmotoren im direkten Durchtrieb laufen.

Der an dem Gehäuseteil 1a angeflanschte im wesentlichen symbolisch dargestellte Antriebsmotor 2 trägt auf seiner verlängerten Welle 3 verdrehlos einen Kegelscheibensatz 4 (Kegelscheibenpaar), welcher mittels einer Kupplung 5 über Mitnehmerscheiben 5a und 5b mit der Motorwelle 3 verdrehfest verbunden werden kann. Alternativ ist über Mitnehmerscheiben 5c ein daran verdrehfest verbundenes Zahnrad 6 mit der Motorwelle 3 koppelbar.

Ein zweiter, am bzw. im gleichen Gehäuse 1a untergebrachter analoger Antriebssatz, der über den Übertragungsstrang 7 mit dem ersten in reibschlüssiger Verdrehverbindung steht, besteht aus einem Antriebsmotor 8, einer Motorwelle 10, einem Kegelscheibensatz 9 (Kegelscheibenpaar), einer Kupplung 11. Er steht über das Zahnrad 12 ebenso wie ersterer mit einem zentralen Zahnrad 13 der Abtriebsbasis in Eingriff. Dieses Zahnrad 13 ist verdrehfest mit einem Kegelrad 14 verbunden, das wiederum mit einem stegfesten Kegelrad 15 kämmt. Dieses wiederum ist mit den Zwischenrädern 16 und den Abtriebsrädern 17 ein Differentialgetriebe, das im Gehäuseteil 1b angeordnet ist.

Bei dem dargestellten Ausführungsbeispiel sind innerhalb einer Starrachse 1c, 1d, die mit den Getriebegehäuse 1a, 1b eine Baueinheit bildet, Triebwellen 18a, 18b zu Fahrzeugrädern geführt.

Die an die Kegelscheibenpaare 4, 9 angrenzend auf den Getriebewellen 3, 10 sitzenden Kupplungen 5 und 11 können natürlich auch anderweitig positioniert sein und in einer anderen als der dargestellten Weise mit den zu kuppelnden Basen in Verbindung stehen. Zur Erfüllung der ihnen zugedachten Funktion weisen sie folgende Komponenten auf:
- eine kegelscheibenfeste Komponente 5a, 11a,
- eine getriebewellenfeste Komponente 5b, 11b,
- eine zum Abtrieb führende Komponente 5c, 11c,
- eine die Komponenten 5a, 11a und 5c, 11c überbrückende Komponente 5d, 11d.

Je nach Art der Einsatzfälle kann es erforderliche oder nützlich sein, in die Antriebspfade weitere drehzahlreduzierende Zahnradstufen anzuordnen.

Für den Betriebsfall des starren Durchtriebs (d. h. ohne Leistungsfluß über das CVT) sind starre Übersetzungsstufen so abgestimmt, dass ein wirtschaftlicher Motorbetriebsbereich einer häufig vorkommen Fahrbetriebsweise zugeordnet ist.

Die Antriebsmotoren 2, 8 sind vorteilhafterweise in Tandembauweise als eine Baueinheit ausgeführt. Dabei sind ihre Zylinder nach Art eines Boxermotors auf beiden Seiten auskragend weitgehend in der Ebene der CVT-Kegelscheibenachsen angeordnet, was eine niedrige, für den Unterflureinsatz z. B. bei Bussen oder ähnlichen Nutzfahrzeugen günstige Bauweise schafft.

Als Betriebsweise bieten sich mehrere vorteilhafte, auf die jeweiligen Einsatzbedingungen und Erfordernisse abgestimmte Funktionsweisen an:
a) bei hohem Drehmomentbedarf und mittlerer Auslastung eines Antriebsmotors 2 stellen die Kupplungskomponenten 5a und 5b den Kraftpfad her über das CVT 4, 7, 9 bzw. die Kupplungskomponenten 11a, 11b sowie Zahnräder 12, 13, 14 zum Differentialgetriebe. Die Drehmomentwandlung vollzieht sich nach bekannter Weise im gleichen Verhältnis des Drehzahlwandelbereiches des CVT, wobei es vorteilhaft ist, je nach Kennliniencharakteristik des Motors 2 diesen in einem verlustarmen Drehzahlbereich zu betreiben.
   Der zweite, stillstehend oder (bei Elektromotoren) leerlaufend mitgeschleppte Antriebsmotor 8 steht für temporär auftretende Belastungsspitzen zur Leistungseinspeisung bereit, wodurch das CVT entlastet bzw. geschont wird.
b) Für Betriebsfälle mit konstant hohem Leistungsbedarf ist der Betrieb beider Antriebsmotoren vorgesehen. Hierbei kann wie vorstehend beschrieben der zweite Motor 8 zusätzlich zugeschaltet oder starr durchgeschaltet werden. Hierbei führt der Leistungspfad beider Motoren 2, 8 direkt mittels der Kupplungskomponenten 5b, 5c, 11c, 1c und der Zahnräder 6, 12, 13 zum Differential. Diese Betriebsweise kann besonders in Anwendungsfällen sinnvoll sein, in denen das Fahrzeug gleichzeitig als Arbeitsmaschine genutzt wird, z. B. bei Radladern bzw. Schaufelbaggern, bei denen hohe Belastungsspitzen auftreten können und die Wirtschaftlichkeit zurücktreten muss. Eine derartige Betriebsweise ist ausgesprochen lebensdauerverlängernd für das CVT.
   Auch bei Fernfahrten mit hoher Fahrgeschwindigkeit und hohem Antriebsleistungsbedarf ist diese Betriebsweise nützlich.

Beim derzeitig hohen Entwicklungsstand mikroprozessorgesteuerter Steuer- und Regeleinrichtungen ist auch ein intelligentes Getriebemanagement möglich. Hierdurch werden Auswahl- und Optimierungsprozesse für Schaltkombinationen und Abläufe nach vorbestimmten Algorithmen selbsttätig durchgeführt.

Auch ist vorteilhaft, die Kraftflussrichtung über das CVT nach bestimmten gespeicherten Belastungsphasen unter Berücksichtigung übersetzungs- und lastabhängiger Lebensdauerkriterien wechseln zu lassen. Ebenso ist einem derartigen Getriebemanagement zugedacht, dass die Lastanteile bzw. Aufteilung der Motoren verlustminimierend errechnet und eingeregelt wird.

Die wesentlichen Vorteile der hier dargestellten Antriebsmotor-CVT-Kombination besteht somit
- in der Verfügbarkeit hoher Antriebsdrehmomente,
- in einer wirtschaftlich günstigen Auslastung der Antriebsmotoren,
- in einer das CVT schonenden Betriebsweise bei besonders harten Betriebsbedingungen,
- in der besseren, gleichmäßigeren Ausnutzung der Verschleißreserven des als Friktionsgetriebe ausgeführten CVTs durch einen möglichen Kraftflussrichtungswechsel im CVT,
- bei starrem Durchtrieb (unter vorgenannten Voraussetzungen) entfallen die Verlustleistungen des CVTs und das CVT wird geschont,
- in einer konstruktiv günstigen Bauweise, insbesondere durch Tandemmotorbauweise, ist sie für den Unterflureinsatz prädestiniert.

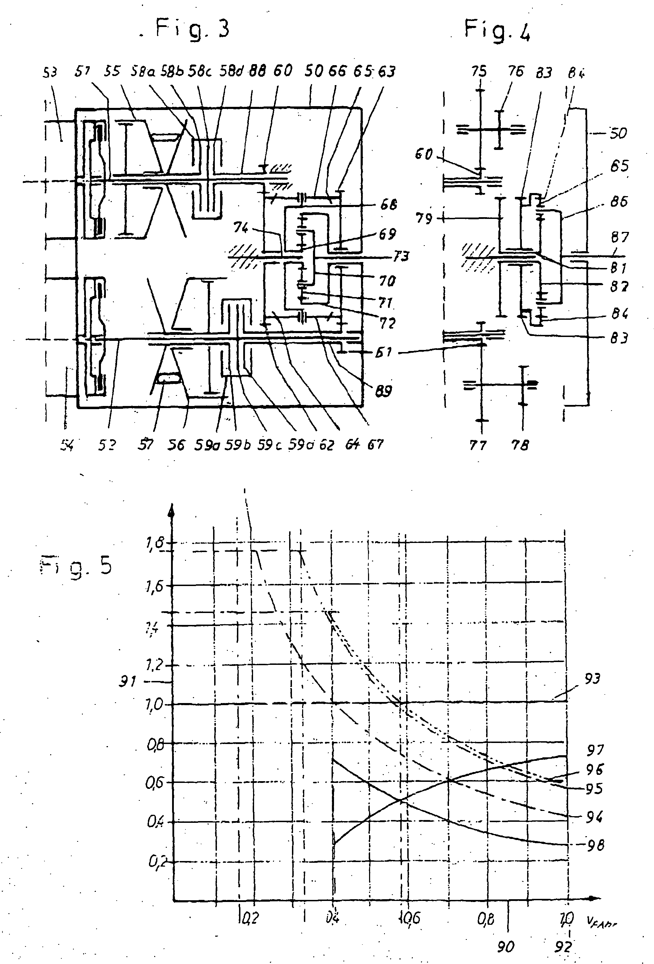

In der Figur 2 ist in eine einem gemeinsamen Gehäuse untergebrachte Doppelanordnung einer Motor-CVT-Kombination mit ihr nachgeschaltetem drehzahlreduzierenden Planetengetriebe als Prinzipskizze dargestellt.

Auf der verlängerten, als Getriebewelle 22 ausgebildeten Welle des Antriebsmotors 21, die mit einer üblichen Anfahrkupplung versehen ist, sitzt im Gehäuse 20 verdrehfest der Kegelscheibensatz 23, der über einen Übertragungsstrang 24 mit einem weiteren, auf der Abtriebswelle 26 verdrehfest angeordneten Scheibensatz 25 in reibschlüssiger Drehverbindung steht. Auf der bzw. angrenzend an die abtriebsseitige Getriebewelle 26 befindet sich ein Drehzahlreduziergetriebe in Form eines Planetengetriebes. Das abtriebswellenfeste innere Sonnenrad 27 steht mit am Steg 30 gelagerten Planetenrädern 27 in kämmenden Eingriff, die des weiteren auf einem gehäusefesten Hohlrad 29 im Eingriff stehen. Die aus dem Gehäuse 20 herausragende, mit dem Steg 30 verdrehfeste Ausgangswelle 31 trägt ein Gelenk 32, an das die anschließend zu einem Treibrad eines Fahrzeuges führende Welle 33 angeflanscht ist.

Eine im/am Gehäuse 20 angeordnete weitere Motor-CVT-Kombination ist in gleicher Weise ausgeführt, bestehend aus einem Motor 35, der kombinierten Motor-Getriebewelle 36, die gleichenfalls mit einer Anfahrkupplung versehen ist, dem Antriebsscheibensatz 37, einem Übertragungselement 38, einem Abtriebsscheibensatz 39, eine Abtriebswelle 40, einem inneren Sonnenrad 41, einem Planetenrad 42, ein Planetensteg 43, einem Hohlrad 44, einer Planetenstegwelle 45, einem Gelenk 46 und einer Treibradantriebswelle 47.

Eine Schaltkupplung 48 zwischen den Antriebswellen 22 und 36 ermöglicht den Antrieb beider Kraftpfade mit nur einem Antriebsmotor.

Eine weitere, nicht dargestellte Ausgestaltung besteht in der Anordnung einer ab- und zuschaltbaren Übertragungseinrichtung zwischen An- und Abtriebswelle 22, 26 und 36, 40 für Betriebsfälle, in denen eine Fahrgeschwindigkeit und ein wirtschaftlicher Betriebsbereich des Antriebsmotors gleichzeitig vorliegen müssen.

Beide Übertragungsstränge werden von einer elektronischen Steuer- und Regeleinrichtung überwacht und auf eine annähernd gleiche Übersetzung eingeregelt. Des weiteren regelt diese Steuer- und Regeleinrichtung entweder über die Stromversorgung der Motoren oder über Übersetzungsdifferenzen der einzelnen CVTs die Belastung der einzelnen Motoren bzw. deren Lastaufteilung. Dabei kann zur Minimierung der Verluste die vorgesehene Regelung so vonstatten gehen, dass
- im Falle niedrigen Antriebsleistungsbedarfs nur ein Motor den Antrieb übernimmt, wobei die Motordrehzahl und die CVT-Übersetzung so eingeregelt werden, dass der Motor in seinem optimalen verlustarmen Kennlinienbereich betrieben wird,
- im Falle eines hohen Antriebsleistungsbedarfes beide Motoren 21, 35 zur Leistungseinspeisung herangezogen werden, ebenfalls unter Anwendung vorstehender Drehzahl- und Übersetzungsregelstrategien.

Die letztgenannte Strategie gilt auch für andere Ausführungsbeispiele z. B. nach den Figuren 1 und 3.

Die wesentlichen Vorteile einer derartigen Motor-CVT-Kombination bestehen
- in der Verfügbarkeit hoher Antriebsdrehmomente,
- in einer wirtschaftlich günstigen Auslastung der Antriebsmotoren
- in einer konstruktiv günstigen Bauweise, und
- in der Möglichkeit des individuellen, getrennten Ansteuerns der unterschiedlichen Fahrzeugseiten und/oder Fahrzeugachsen zugeordneten CVTs zum kombinierten Antreiben und Lenken von Kettenfahrzeugen, sowie der elektronisch geregelten seitenunterschiedlichen Antriebskraftverteilung zur Vermeidung oder Verringerung von gefährlichen Durchrutsch- und/oder Schleudereffekten bzw. zur gezielten Verteilung oder Traktion auf Vorder- und Hinterachse bei allradgetriebenen Fahrzeugen.

In der Figur 3 sind Getriebewellen 51, 52 zu erkennen, die im Gehäuse 50 gelagert sind und die als verlängerte Motorwellen der Antriebsmotoren 53, 54 ausgebildet sind und entsprechende, übliche Anfahrkupplungen enthalten. Auf diesen Getriebewellen 51, 52 sitzen verdrehlose Kegelscheibenpaare 55, 56, die über den Übertragungsstrang 57 in reibschlüssiger Verbindung stehen. Auf den gleichen Wellen befinden sich auch Kupplungsformationen, 58, 59, die so geartet und mit den zu schaltenden Basen so verbunden sind, dass alternativ
- die Kegelscheibensätze 55, 56 verdrehlose auf ihren Wellen 51, 52 sitzen,
- die Kegelscheibensätze 55, 56 fest mit ihren Wellen 51, 59 verbunden sind, z. B. mittels der Kupplungskomponenten 58b, 58c, 59b, 59c,
- die Kegelscheibensätze verdrehfest mit einer im Leistungspfad weiterführenden Basis 60, 61 verbunden sind, z. B. mittels Kupplungskomponenten 58b, 58a, 58d, 59b, 59a, 59d, oder
- die Getriebe bzw. Motorwellen 51, 52 verdrehfest mit einer im Antriebspfad weiterführenden Basis 60, 61 verbunden sind, z. B. mittels Kupplungskomponenten 58c, 58d, 59c, 59d.

Das den Leistungspfad fortführende Überlagerungs-Sammelgetriebe ist im hier dargestellten Beispiel nach Art eines Kfz-Differentials aufgebaut jedoch mit umgekehrter Funktionsaufgabe. Es besteht aus zwei, jeweils mit den auf den Getriebewellen sitzenden Stirnrädern 60, 61 kämmenden Stirnrädern 62 und 63, an denen Kegelverzahnungen 64, 65 angeordnet sind, die wiederum mit auf einen Steg 68 gelagerten Zwischenrädern 66, 67 im Eingriff stehen. Dieser Steg 68 bildet die Abtriebsbasis des als Planetengetriebe ausgebildeten Sammelgetriebes, das ein Planetenverhältnis von 1 hat. Die sich daraus ergebenden Drehzahl- und Drehmomentverläufe ergeben sich hierzu aus der Figur 5.

Zur weiteren, abtriebsseitigen Drehzahlreduktion ist innerhalb des genannten Sammel-Umlaufgetriebes ein weiteres Planetengetriebe integriert. Dieses besteht aus einem mit dem Steg 68 als Sammelgetriebe verdrehfest verbundenen inneren Sonnerad 69, das mit auf einem als Ausgangsbasis fungierenden Steg 70 gelagerten Planetenrädern 71 in Eingriff steht, und aus einem gehäusefesten Hohlrad 72.

Auch hier ist eine microprozessorgesteuerte Regeleinrichtung vorgesehen zum Zwecke einer gleichmäßigen Ausschöpfung der Verschleißkapazitäten der CVT-Radpartien durch Inanspruchnahme der beschriebenen erfindungsgemäßen Kupplungsschaltmöglichkeiten und der Kraftflussrichtungen im CVT. Des weiteren ist es über diese Steuerung möglich, über das normale Betriebsmanagement hinaus die Leistungselektronik für die Motorbeaufschlagung vorzunehmen. Insbesondere bei Nutzfahrzeugen mit erwarteten Arbeitsmaschinencharakter oder bei sogenannten "Eisplattenfahrten", bei denen hohe Belastungsspitzen im Antriebspfad auftreten, kann nach Erkennung entsprechender kritischer Betriebszustände einer der Motoren, der ursprünglich an der CVT-Leistungsübertragung nicht beteiligt ist und in einer Betriebsbereitschaft gehalten wird, indem er durch das ihm zugeordnete CVT im Leerlaufbetrieb arbeitet, bei Belastungsspitzen aufgrund der belastungsabhängigen Nachgiebigkeit der anderen an der Leistungsübertragung beteiligten Komponenten und durch seine Massenträgheit spontan zur Leistungseinspeisung und CVT-Entlastung herangezogen werden.

Vorteile dieser Konzeption sind, dass
- mit einem wirksamen Planetenverhältnis von 1 für das CVT eine günstige Belastungsbeaufschlagung erzielt werden kann, wobei ein Kraftpfadwechsel (starrer- oder CVT-Durchtrieb) zum Zwecke einer besseren und gleichmäßigeren Ausschöpfung der ähnlichen Verschleißreserven die Belastungsverhältnisse zwischen den beiden Scheibenpaaren wechseln aber größenmäßig gleichbleiben,
- durch die integrierte Anordnung des nachgeschalteten Reduziergetriebes im Sammelgetriebe der durch die Zwischenräder 66, 67 bedingte Bauraum vorteilhaft ausgenutzt wird,
- bei hohen Antriebsleistungen der CVT-Pfad durch die Möglichkeit der Leistungseinspeisung durch den zweiten Motor das CVT entlastet und somit geschont werden kann,
- bei hohen Antriebsleistungen bevorzugt bei geringen Regelungen der Drehzahl, z. B. bei Fernfahrten mit hoher Geschwindigkeit das CVT durch die Möglichkeit des direkten Durchtriebes vom Antrieb entbunden wird, so dass keine Leistungsverluste anfallen und das CVT geschont wird,
- dass bei gleichen, sich wiederholenden Geschwindigkeits- bzw. CVT-Übersetzungsbetriebsweisen durch Ausnutzung der beschriebenen erfindungsgemäßen Kupplungsschaltmöglichkeiten der Kraftfluss und somit auch die wirksamen Übersetzungsverstellungen im CVT umgekehrt und somit das Verschleißvolumen der CVT optimal ausgenutzt werden können.

In der Figur 4 sind alternative Sammel- und Reduziergetriebeausführungen zur Drehzahlreduzierung vor dem eigentlichen Sammelgetriebe angeordnet, das als klassisches Planetengetriebe ausgebildet ist.

Die aus der vorstehend beschriebenen Figur 3 übernommene Zahnräder 60 und 61 der beiden Leistungspfade wirken je auf ein Zwischengetriebe 75, 76 mit einem Zahnrad 79 in Drehverbindung, das über eine Hohlwelle 81 mit einem als inneres Sonnenrad fungierenden Zahnrad 82 eines Planetengetriebes in Drehverbindung steht. Das auf der Welle 52 sitzende Zahnrad 61 steht über Zwischengetriebe 77, 78 mit einem Zahnrad 83 in Drehverbindung, welches einen innen verzahnten Zahnkranz 84 aufweist, der als äußeres Sonnenrad eines Planetengetriebes fungiert. Zwischen beiden Sonnenrädern 82, 85 befinden sich mit diesen im Eingriff auf dem Steg 86 gelagerte Planetenräder 85. Die stegfest im Gehäuse 50 gelagerte Ausgangswelle 87 steht mit einem Treibrad eines (nicht dargestellten) Fahrzeugs in Drehverbindung.

In der Figur 5 ist als Diagrammdarstellung die relativen Drehmomentverläufe in Abhängigkeit der Abtriebsdrehzahl proportionalen Fahrgeschwindigkeit einer Antriebskonzeption aus einem Antriebsmotor mit konstanter Drehmomentkennlinie dargestellt als
a) reine, hintereinandergeschaltete Motor-CVT-Kombination mit R_{CVT} = 6
b) reine, hintereinandergeschaltete Motor-CVT-Kombination mit R_{CVT} = 3
c) Antriebsmotor-CVT-Kombination mit Leistungsverzeigung und einem Differentialsammelgetriebe mit einem Planetenverhältnis U_{P1} = 1,0 und einem CVT-Regelbereich von R_{CVT} = 6, sowie
d) den relativen Antriebsmomentenverläufen der beiden Leistungspfade für den Ausführungsfall gemäß c).

In der Diagrammdarstellung sind in Abhängigkeit der relativen Fahrzeugfahrgeschwindigkeiten der Abszisse 90 auf der Ordinate 91 die Relation der An- und Abtriebsmomente verschiedener Basen der erfindungsgemäßen Einrichtung nach Figur 3 zugeordnet. Verluste bleiben hier der besseren Übersicht wegen unberücksichtigt.

Der Betriebspunkt 92 entspricht der höchsten Fahrgeschwindigkeit bei maximaler Motordrehzahl sowie bei Konzeptionen ohne als auch mit einem CVT;
Gerade 93 stellt ein konstant verlaufendes Motordrehmoment dar, bei einem starren Durchtrieb = Abtriebsdrehmoment;
die Kurve 94 entspricht dem Abtriebsdrehmomentverlauf mit einem CVT mit R = 6, wobei das Antriebsmoment der Geraden 93 entspricht;
die Kurve 95 entspricht dem Abtriebsdrehmomentverlauf mit einem CVT mit R = 3, wobei die Antriebsmomentenbelastung der Geraden 93 entspricht;
die Kurve 96 entspricht dem Abtriebsdrehmomentverlauf bei einer Leistungsverzeigung nach Figur 3 mit einem CVT mit R = 6 und einem Planetenverhältnis im Sammelüberlagerungsgetriebe von 1,0.

Als Antriebsmomentenbeaufschlagung bei dieser Ausführungsweise zeigt Kurve 97 für den variablen Pfad mit CVT und Kurve 98 den starren Pfad.

Die wesentlich niedrigere Antriebsmomentenbeaufschlagung des CVT bei Leistungsteilung gegenüber einer Anordnung im Hauptstrang bei einem noch ausreichenden Gesamt-Drehmomentwandlungsverhältnis (im vorliegenden Fall von ca. 2,5) verdeutlichen den Vorgang einer Leistungsteilung.

## Patentansprüche

1. Antriebsystem mit CVT-Getriebe enthaltend
wenigstens zwei Antriebsmotoren, die Verbrennungs-, Hydraulik- bzw. Elektromotoren sind, wenigstens ein den Antriebsmotoren nachgeordnetes CVT in Form eines Kegelscheibenumschlingungsgetriebes mit einem an- und einem abtriebseitig verstellbaren Kegelscheibenpaar, die jeweils aus einer axial festen und einer axial verstellbaren Kegelscheibe bestehen, und die über einen bandförmigen Übertragungsträger in reibschlüssiger Drehverbindung stehen,
wobei die Abtriebseite des CVT über einen zugeordneten Abtrieb (20, 21) mit mindestens einem Antrieb eines Fahrwerkes für ein Kfz oder eine mobile Arbeitsmaschine wie z. B. einen Bagger, eine Straßenbau- oder eine landwirtschaftliche Maschine in Drehverbindung steht,
**dadurch gekennzeichnet,**
**dass** die CVT-Kegelscheibenpaare auf Wellen (3, 10) verdrehlos, d.h. drehbar gelagert sind und
**dass** jede dieser Wellen (3, 10) einem der Antriebsmotoren (2, 8) zugeordnet ist, mit dem sie verdrehfest verbunden sind,
wobei sowohl die axial festen Kegelscheiben als auch die Wellen (3, 10) und die Abtriebe (20, 21) jeweils mit ihnen verbundene Kupplungsscheiben (5a, 5b, 5c, 11a, 11b, 11c) aufweisen, die einer jeweiligen Schaltkupplung zugeordnet sind, so dass alternativ die CVT-Kegelscheibenpaare (4, 9) oder die Abtriebe (20, 21) mit den mit den Antriebsmotoren (2, 8) verbundenen Wellen (3, 10) verdrehfest koppelbar sind.

2. Antriebsystem gemäß dem Oberbegriff von Anspruch 1
**dadurch gekennzeichnet,**
**dass** die CVT-Kegelscheibenpaare auf Wellen (51, 52) verdrehlos, d.h. drehbar gelagert sind und
**dass** jede dieser Wellen (51, 52) einem der Antriebsmotoren (53, 54) zugeordnet ist, mit dem sie über Anfahrkupplungen verdrehfest verbindbar sind,
wobei sowohl die axial festen Kegelscheiben als auch die Wellen (51, 52) und die Abtriebe (88, 89) jeweils ihnen verbundene Kupplungsscheiben (58b, 58c, 58d, 59b, 59c, 59d) aufweisen, die einer jeweiligen Schaltkupplung zugeordnet sind, so dass alternativ die CVT-Kegelscheibenpaare (55, 56) oder die Abtriebe (88, 89) mit den mit den Antriebsmotoren (53, 54) verbundenen Wellen (51, 52) verdrehfest koppelbar sind.

3. Antriebssystem gemäß Anspruch 1,
**dadurch gekennzeichnet,**
**dass** die Abtriebe (20, 21) an ihren anderen Enden je ein Zahnrad (6, 12) verdrehfest tragen, das mit einem (Sammel-) Zahnrad (13) in Eingriff steht.

4. Antriebssystem gemäß Anspruch 1,
**dadurch gekennzeichnet,**
**dass** das Zahnrad 13 mit einem Kegelrad (14) eines Differentialgetriebes (15, 16, 17a, 17b) verdrehfest verbunden ist.

5. Antriebssystem gemäß Anspruch 1 oder 2
**dadurch gekennzeichnet,**
**dass** die Abtriebe als Hohlwellen ausgebildet sind und koaxial zu den Wellen (3, 10, 51, 52) angeordnet sind.

6. Antriebssystem gemäß Anspruch 1 oder 2
**dadurch gekennzeichnet,**
**dass** die Schaltkupplung eine die den Wellen und den Abtrieben zugeordneten Kupplungsscheiben umschließende Kupplungsglocke (5d, 11d; 58a, 59a) aufweist.

## Claims

1. Drive system with a continuously variable transmission comprising
at least two drive motors which are combustion engines, hydraulic or electric motors,
at least one continuously variable transmission disposed downstream of the drive motors in the form of a cone pulley contact transmission with a pair of cone pulleys which are adjustable at the driving end and at the output end, which each comprise an axially fixed cone pulley and an axially adjustable cone pulley and which are in frictional rotary connection by way of a belt-like transmission carrier,
wherein the output end of the continuously variable transmission is rotatably connected by way of an associated output (20, 21) to at least one drive of a chassis for a motor vehicle or a mobile working machine such as for example an excavator, a road-building machine or an agricultural machine,
**characterised in that** the pair of cone pulleys of the continuously variable transmission are mounted free of torsion, i.e. rotatably, on shafts (3, 10) and
that each of these shafts (3, 10) is associated with one of the drive motors (2, 8) to which they are connected so as to be fixed against torsion,
wherein not only the axially fixed cone pulleys but also the shafts (3, 10) and the outputs (20, 21) each have rigidly connected to them clutch discs (5a, 5b, 5c, 11a, 11b, 11c) which are associated with a respective gear-change clutch, so that the cone pulleys (4, 9) of the continuously variable transmission or the outputs (20, 21) can be alternately coupled so as to be fixed against torsion to the shafts (3, 10) which are connected to the drive motors (2, 8).

2. Drive system according to the preamble to Claim 1, **characterised in that** the pairs of cone pulleys of the continuously variable transmission are mounted free of torsion, i.e. rotatably, on shafts (51, 52) and
that each of these shafts (51, 52) is associated with one of the drive motors (53, 54) to which they can be connected by way of starting clutches so as to be fixed against torsion, wherein not only the axially fixed cone pulleys but also the shafts (51, 52) and the outputs (88, 89) each have rigidly connected to them clutch discs (58b, 58c, 58d, 59b, 59c, 59d) which are associated with a respective gear-change clutch, so that the pairs of cone pulleys (55, 56) of the continuously variable transmission or the outputs (88, 89) can be alternately coupled so as to be fixed against torsion to the shafts (51, 52) which are connected to the drive motors (53, 54).

3. Drive system as claimed in Claim 1, **characterised in that** the outputs (20, 21) each bear at their other ends a gear (6, 12) which is in engagement with a (collective) gear (13).

4. Drive system as claimed in Claim 1, **characterised in that** the gear (13) is connected so as to be fixed against torsion to a bevel gear (14) of a differential gear (15, 16, 17a, 17b).

5. Drive system as claimed in Claim 1 or 2, **characterised in that** the outputs are constructed as hollow shafts and are disposed coaxially with respect to the shafts (3, 10; 51,52).

6. Drive system as claimed in Claim 1 or 2, **characterised in that** the gear-change clutch has a clutch housing (5d, 11d, 58a, 59a) which encloses the clutch discs associated with shafts and the outputs.

## Revendications

1. Système d'entraînement avec une transmission variable continue comprenant au moins deux moteurs d'entraînement, lesquels sont des moteurs à combustion interne, des moteurs hydrauliques ou des moteurs électriques, au moins une transmission variable continue qui est disposée derrière les moteurs d'entraînement et qui se présente sous la forme d'un réducteur à disques coniques agissant par enroulement et comprenant une paire de disques coniques réglable du côté entrée et du côté sortie qui se composent respectivement d'un disque conique fixe dans le sens axial et d'un disque conique déplaçable dans le sens axial et qui sont en liaison de rotation par adhérence par l'intermédiaire d'un élément de transmission en forme de bande, dans lequel le côté sortie de la transmission variable continue est en liaison de rotation par l'intermédiaire d'une sortie associée (20, 21) avec au moins un élément d'entraînement d'un mécanisme de déplacement d'un véhicule automobile ou d'un engin de travail mobile, comme par exemple une pelle mécanique, une machine de construction routière ou une machine agricole, **caractérisé en ce que** les paires de disques coniques de la transmission variable continue sont logées sans contraintes de torsion, c'est-à-dire de manière tournante, sur des arbres (3, 10) et **en ce que** chacun de ces arbres (3, 10) est associé à un des moteurs d'entraînement (2, 8) avec lequel ils sont reliés en solidarité de torsion, alors qu'aussi bien les disques coniques fixes au niveau axial que les arbres (3, 10) et les sorties (20, 21) comprennent respectivement des disques d'accouplement (5a, 5b, 5c, 11a, 11b, 11c) qui sont reliés de manière rigide avec elles et qui sont associés à un embrayage respectif, de sorte qu'alternativement les paires de disques coniques (4, 9) de la transmission variable continue ou les sorties (20, 21) peuvent être accouplées en solidarité de torsion avec les arbres (3, 10) reliés aux moteurs d'entraînement (2, 8).

2. Système d'entraînement selon le préambule de la revendication 1, **caractérisé en ce que** les paires de disques coniques de la transmission variable continue sont logées sans contraintes de torsion, c'est-à-dire de manière tournante, sur des arbres (51, 52) et **en ce que** chacun de ces arbres (51, 52) est associé à un des moteurs d'entraînement (53, 54) avec lequel ils peuvent être reliés en solidarité de torsion par l'intermédiaire d'embrayages de démarrage, alors qu'aussi bien les disques coniques fixes dans le sens axial que les arbres (51, 52) et les sorties (88, 89) comprennent respectivement des disques d'accouplement (58b, 58c, 58d ; 59b, 59c, 59d) qui sont reliés de manière rigide avec elles et qui sont associés à un embrayage respectif, de sorte qu'alternativement les paires de disques coniques (55, 56) de la transmission variable continue ou les sorties (88, 89) peuvent être accouplées en solidarité de torsion avec les arbres (51, 52) reliés aux moteurs d'entraînement (53, 54).

3. Système d'entraînement selon la revendication 1, **caractérisé en ce qu'**à leurs autres extrémités les sorties (20, 21) sont munies respectivement d'une roue dentée (6, 12) qui est en solidarité de torsion et qui est en prise avec une roue dentée (collectrice) (13).

4. Système d'entraînement selon la revendication 1, **caractérisé en ce que** la roue dentée (13) est reliée en solidarité de torsion avec un pignon conique (14) d'un engrenage différentiel (15, 16, 17a, 17b)

5. Système d'entraînement selon la revendication 1 ou 2, **caractérisé en ce que** les sorties sont configurées comme arbres creux et sont disposées coaxialement aux arbres (3, 10 ; 51, 52).

6. Système d'entraînement selon la revendication 1 ou 2, **caractérisé en ce que** l'embrayage comprend une cloche d'embrayage (5d, 11d ; 58a, 59a) qui entoure les disques d'accouplement associés avec les arbres et avec les sorties.
